# EUROPÄISCHE PATENTSCHRIFT

(11) **EP 3 566 105 B1**
(45) Veröffentlichungstag und Bekanntmachung des Hinweises auf die Patenterteilung: **24.03.2021**
(21) Anmeldenummer: 17822265.9
(22) Anmeldetag: 19.12.2017
(51) Int. Cl.: G05D 1/02, B60W 30/165, B60W 50/14, G08G 1/00

(54) **VERFAHREN UND SYSTEM ZUM BEREITSTELLEN EINER ZUMINDEST TEILWEISE AUTOMATISCHEN FÜHRUNG EINES FOLGEFAHRZEUGS**
METHOD AND SYSTEM FOR PROVIDING AN AT LEAST PARTIALLY AUTOMATIC GUIDANCE OF A FOLLOWING VEHICLE
PROCÉDÉ ET SYSTÈME DE PRÉPARATION D'UNE CONDUITE AU MOINS PARTIELLEMENT AUTOMATIQUE D'UN VÉHICULE SUIVEUR

(30) Priorität: 09.01.2017 DE 102017200168
(43) Veröffentlichungstag der Anmeldung: 13.11.2019
(73) Patentinhaber: Volkswagen Aktiengesellschaft, 38440 Wolfsburg (DE)
(72) Erfinder: KOPISCHKE, Stephan, 38442 Wolfsburg (DE)
(86) Internationale Anmeldenummer: PCT/EP2017/083676
(87) Internationale Veröffentlichungsnummer: WO 2018/127411

(56) Entgegenhaltungen:
- EP-A1- 1 681 663
- EP-A1- 2 390 744
- US-A1- 2015 127 189

## Beschreibung

Die vorliegende Erfindung betrifft ein Verfahren und ein System zum Bereitstellen einer zumindest teilweise automatischen Führung eines Folgefahrzeugs.

Zur Steigerung der Effizienz und Sicherheit im Verkehr und in der Logistik, insbesondere beim Transport von Gütern, aber auch im Personentransportwesen, wird eine weitreichende Automatisierung von Fahrzeugen angestrebt. Dazu sind bereits Techniken bekannt, die durch automatische Eingriffe auf verschiedenen Ebenen in die Steuerung eines Fahrzeugs den Fahrer entlasten oder einzelne Fahrmanöver vollautomatisch durchführen. Dies reicht bis zu einer Fernsteuerung oder dem autonomen Abfahren einer Route durch ein Fahrzeug.

Je höher dabei der Grad der automatischen Eingriffe in die Steuerung ist, desto höhere Ansprüche werden an die Ausstattung des derart gesteuerten Fahrzeugs gestellt. Beispielsweise ist eine Vielzahl redundanter Sensoren für eine sichere, umfassende Umfeldbeobachtung erforderlich und die Verarbeitung der dabei anfallenden Daten setzt eine große Rechenleistung im Fahrzeug voraus. Das Ziel einer vollautomatischen Steuerung von Fahrzeugen ist aus diesem Grund nur unter erheblichem technischen und finanziellen Aufwand realisierbar. Es besteht daher ein Bedarf für Lösungen, die einerseits ein zumindest teilweise automatisiertes Führen eines Fahrzeugs erlauben und andererseits die technischen Voraussetzungen in einem geringeren Rahmen halten, sodass sie auch in einem unteren oder mittleren Preissegment realisierbar sind.

Das in der US 2015/0154871 A1 vorgeschlagene Verfahren zur Steuerung der Bewegung einer Gruppe von Fahrzeugen auf einer Fahrbahn sieht vor, dass ein oder mehrere Folgefahrzeuge durch eine Steuervorrichtung eines Leitfahrzeugs gesteuert werden, wobei die Fahrzeuge sich als eine Einheit mit einer variablen Form bewegen und untereinander kooperieren.

Die DE 10 2012 212 681 A1 beschreibt ein Verfahren zum autonomen Geleiten von Fahrzeugen. Dabei empfängt ein Folgefahrzeug eine Zielposition relativ zu einem Leitfahrzeug sowie Routendaten über die durch das Leitfahrzeug befahrene Route. Durch Borderfassungsvorrichtungen des Folgefahrzeugs wird ferner der zurückgelegte Weg des Leitfahrzeugs erfasst und anhand dieser Daten werden Nachführungsdaten abgeleitet. Durch einen Vergleich der Routendaten und der Nachführungsdaten wird eine Genauigkeit bestimmt. Anschließend erfolgt auf Basis der Genauigkeit eine autonome Steuerung des Folgefahrzeugs zu der Zielposition relativ zum Leitfahrzeug.

Bei dem in der US 2013/0079953 A1 beschriebenen Verfahren werden Fahrzeuge hinter einem Leitfahrzeug in einem Konvoi geführt. Es werden Daten bezüglich der maximal zugelassenen sowie der aktuellen Anzahl von Fahrzeugen im Konvoi übertragen. Es wird bestimmt, ob ein Fahrzeug des Konvois das Signal blockiert, und ein solches Fahrzeug wird zu einem Pseudo-Leitfahrzeug eines Subkonvois. Auf diese Weise kann ein neu hinzukommendes Folgefahrzeug die Daten von anderen Folgefahrzeug empfangen.

Bei dem in der US 2015/0127189 A1 beschriebenen Verfahren zum autonomen Nachführen eines Folgefahrzeugs auf der Spur eines Leitfahrzeugs sendet das Leitfahrzeug Routeninformationen und erste Koordinationsinformationen an das Folgefahrzeug. Durch Umfeldsensoren des Folgefahrzeugs werden Fahrbewegungen des Leitfahrzeugs erfasst und anhand dieser Informationen werden zweite Koordinationsinformationen erzeugt. Die ersten und zweiten Koordinationsinformationen werden verglichen und ein autonomes Nachführen wird ausgeführt, wenn sie übereinstimmen.

Die US 2015/0153733 A1 beschreibt eine Steuervorrichtung für ein Fahrzeug, die einen Zustand der Fahrunfähigkeit erkennen und eine automatische Führung hinter einem Leitfahrzeug einleiten kann. Das Leitfahrzeug führt das Folgefahrzeug zu einer Zielposition, etwa einem Parkplatz oder einem Krankenhaus.

Auf ähnliche Weise kann bei dem in der US 2016/0071418 A1 beschriebenen System ein Notfall bei einem Fahrzeug erkannt und ein Hilfegesuch übertragen werden. Ein Leitfahrzeug sendet Navigationsanweisungen, anhand derer das Fahrzeug automatisch gesteuert wird. Dabei kann die Suche nach einem Leitfahrzeug über eine zentrale Stelle vermittelt werden.

Der vorliegenden Erfindung liegt die Aufgabe zugrunde, bei einem Verfahren und einem System zum Bereitstellen einer zumindest teilweise automatischen Führung eines Folgefahrzeugs eine flexible und einfach nutzbare Möglichkeit einer automatischen Fahrt zu erlauben.

Die Druckschrift EP 2 390 744 A1 betrifft ein Steuerungssystem zum Fahren in einem Platoon, wobei das Platoon ein Führungsfahrzeug und ein oder mehrere Folgefahrzeuge umfasst, die dem Führungsfahrzeug automatisch nachfolgen, wobei das Führungsfahrzeug die Bewegung der Folgefahrzeuge steuert. Dabei umfasst jedes Folgefahrzeug und das Führungsfahrzeug Kommunikationsmittel, wobei das Steuerungssystem eine gemeinsame Zeitbasis umfasst, welche einen Steuerbefehl zum Vorschlagen einer Aktion ermöglicht, der vom Führungsfahrzeug an zumindest eines der Folgefahrzeuge vor einem Steuerungspunkt kommuniziert.

Die Druckschrift US 2015/0127189 A1 beschreibt ein Verfahren und ein System zum autonomen Tracken eines Folgefahrzeugs auf der Spur eines Führungsfahrzeugs. Eine Führungsnachricht wird vom Folgefahrzeug empfangen und vom Folgefahrzeug zurückgewiesen oder mit einer Folgenachricht bestätigt. Nach dem Empfang der Folgenachricht wird ein erstes Element eines Koordinierungsinformation zum Koordinieren des autonomen Trackens an die Folgefahrzeuge vom Führungsfahrzeug gesendet. Ein zweites Element der Koordinierungsinformation wird zur Koordinierung des autonomen Trackens durch Umgebungssensoren des Folgefahrzeugs auf der Basis der Bewegung des Führungsfahrzeugs detektiert. Die ersten und zweiten Elemente der Koordinierungsinformation werden durch das Folgefahrzeug miteinander verglichen. Im Fall einer Übereinstimmung der Vergleichsergebnisse wird das autonome Tracken basierend auf den ersten und zweiten Elementen der Koordinierungsinformation durchgeführt. Im Fall eins abweichenden Vergleichsergebnisses wird das autonome Tracken beendet.

Die Druckschrift EP 1 681 663 A1 offenbart ein Verfahren zum vereinten Fahren eine Gruppe von Fahrzeugen, wobei jedes Fahrzeug mit einer mit einem Navigationssystem gekoppelten Kommunikationseinrichtung ausgestattet ist. Dabei wird ein Fahrzeug der Gruppe als Master-Fahrzeug klassifiziert, welches die Gruppe anführt, während die verbleibenden Fahrzeuge der Gruppe als Slave-Fahrzeug eingestuft werden, die Master-Fahrzeug folgen. Ein zentraler remote angeordneter Navigationsserver versorgt die Fahrzeuge mit einem Navigationsservice, wobei der Navigationsserver für jedes Slave-Fahrzeug Fahrtrouteninstruktionen berechnet, so dass die Slave-Fahrzeuge angewiesen werden, dem Master-Fahrzeug zu folgen. Die Fahrtrouteninstruktionen werden an die Slave-Fahrzeuge über ein Kommunikationsnetzwerk übertragen.

Erfindungsgemäß wird diese Aufgabe durch ein Verfahren mit den Merkmalen des Anspruchs 1 und ein System mit den Merkmalen des Anspruchs 12 gelöst. Vorteilhafte Ausgestaltungen und Weiterbildungen ergeben sich aus den abhängigen Ansprüchen.

Bei dem erfindungsgemäßen Verfahren der eingangs genannten Art werden Verfügbarkeitsdaten zumindest eines Leitfahrzeugs erfasst. Ferner werden Anfragedaten des Folgefahrzeugs erfasst und anhand der Verfügbarkeitsdaten und der Anfragedaten werden Angebotsdaten über das Leitfahrzeug erzeugt und an das Folgefahrzeug übertragen. Anhand der Angebotsdaten wird eine Angebotsausgabe erzeugt und ausgegeben, wobei die Ausgabe insbesondere im Folgefahrzeug erfolgt. Es wird eine Nutzereingabe erfasst und anhand der Nutzereingabe werden Annahmedaten erzeugt. Ferner werden Nachführungsdaten erzeugt und an das Folgefahrzeug übertragen. Das Folgefahrzeug wird anhand der Nachführungsdaten zumindest teilweise automatisch hinter dem Leitfahrzeug geführt.

Dadurch kann dem Folgefahrzeug ein geeignetes Leitfahrzeug zur Verfügung gestellt werden, um eine zumindest teilweise automatische Führung zu ermöglichen. Ferner können Vorteile für den Energie- beziehungsweise Kraftstoffverbrauch des Folgefahrzeugs genutzt werden, die etwa durch ein automatisches Nachführen im Windschatten des Leitfahrzeugs auftreten. Zudem kann das erfindungsgemäße Verfahren eine Zwischenstufe auf dem Weg zur autonomen, vollautomatischen Führung von Fahrzeugen darstellen, wobei Nutzern eine vertrauensfördernde Alternative zur Verfügung gestellt wird.

Durch das erfindungsgemäße Verfahren kann einer breiten Käuferschicht die Möglichkeit gegeben werden, mit dem eigenen Fahrzeug mit einem hohen Automatisierungsgrad zu fahren, ohne dass das eigene Fahrzeug technisch alleine, das heißt vollkommen autonom, dazu in der Lage wäre. Insbesondere wird eine elektronische Ankopplung des Folgefahrzeugs an das Leitfahrzeug durchgeführt, wobei in diesem Fall die Aufgabe des Leitfahrzeugs analog zum Ziehen eines Wohnanhängers zu betrachten ist. Insbesondere kann vorgesehen sein, dass beispielsweise eine Ausstattung des Folgefahrzeugs zur Implementierung des Verfahrens als Zusatzoption, beispielsweise "platooning capable" genannt, gewählt werden kann. In diesem Fall genügt eine deutlich reduzierte Ausstattung des Folgefahrzeugs mit Sensoren und Aktoren, verglichen mit den Anforderungen für ein vollkommen autonomes Fahren. Insbesondere sind derartige Ausstattungen bereits auf dem Markt erhältlich und können zu wesentlich reduzierten Systemkosten angeboten werden.

Das Verfahren sieht vor, dass das Folgefahrzeug unter bestimmten Voraussetzungen an ein vorausfahrendes Fahrzeug, bezeichnet als "platoon leader" oder "Leitfahrzeug", elektronisch ankoppeln kann. Als Leitfahrzeuge kommen prinzipiell alle anderen Fahrzeuge infrage, beispielsweise PKW, LKW und Busse. Nach dem Ankoppeln wird das Folgefahrzeug automatisch so gesteuert, dass es hinter dem Leitfahrzeug fährt. Dies bietet insbesondere dem Fahrer des Folgefahrzeugs den Vorteil, während der automatischen Nachführung Nebentätigkeiten ausführen zu können, zum Beispiel zu lesen oder zu telefonieren. Des Weiteren kann ein geringerer Automatisierungsgrad vorgesehen sein, bei dem der Fahrer des Folgefahrzeugs beispielsweise weiterhin den Verkehr überwacht, jedoch nicht ständig aktiv an der Führung des Folgefahrzeugs beteiligt ist.

Das zumindest eine Leitfahrzeug kann durch einen Fahrer oder vollautonom gesteuert werden. Insbesondere werden bei dem erfindungsgemäßen Verfahren Verfügbarkeitsdaten einer Vielzahl von Leitfahrzeugen erfasst.

Die Erfassung der Verfügbarkeitsdaten, die insbesondere durch das zumindest eine Leitfahrzeug erzeugt werden, erfolgt dabei auf an sich bekannte Weise. Es kann vorgesehen sein, dass ein potentielles Leitfahrzeug automatisch Verfügbarkeitsdaten bereitstellt oder dass die Bereitstellung manuell erfolgt, beispielsweise durch eine Bedienhandlung eines Fahrers des Leitfahrzeugs. Ferner können die Verfügbarkeitsdaten auf Anfrage durch das Leitfahrzeug bereitgestellt werden. Die Verfügbarkeitsdaten des Leitfahrzeugs können mittels einer datentechnischen Verbindung an eine Erfassungseinheit übertragen werden, etwa durch ein drahtloses Netzwerk, ein Mobilfunknetz oder mittels anderer an sich bekannter Mittel zur Übertragung von Daten.

Durch das erfindungsgemäße Verfahren können auf Anfrage verfügbare Leitfahrzeuge vorteilhafterweise an Folgefahrzeuge vermittelt werden. Im Unterschied zu bekannten Lösungen, die eine Nachführung eines Folgefahrzeugs hinter einem Leitfahrzeug beschreiben, erlaubt die Erfindung auch eine darüber hinausgehende flexible Zuordnung geeigneter Leitfahrzeuge, selbst wenn diese zu einem bestimmten Zeitpunkt noch nicht direkt die Führung übernehmen können, etwa weil die Fahrzeuge zu weit voneinander entfernt sind oder weil eine Route gerade erst geplant wird. Die Erfindung sieht dazu die Bereitstellung von Angebotsdaten vor, die an das Folgefahrzeug übertragen werden. Auf diese Weise können dem Fahrer des Folgefahrzeugs Informationen über verfügbare Leitfahrzeuge bereitgestellt werden und der Fahrer kann aktiv durch eine Nutzereingabe die Erzeugung der Annahmedaten veranlassen. Beispielsweise kann auf diese Weise eine Auswahl verschiedener Leitfahrzeuge angeboten werden, von denen der Nutzer ein geeignetes Angebot annehmen kann. Sind verschiedene Leitfahrzeuge verfügbar, können unterschiedliche Bedingungen für die Nachführung verglichen werden. Dies bietet insbesondere dem Nutzer des Folgefahrzeugs den Vorteil, dass das Leitfahrzeug nicht nur von außen zugeteilt, sondern auch selbst ausgewählt werden kann.

Dabei umfassen die Verfügbarkeitsdaten des zumindest einen Leitfahrzeugs eine aktuelle Position, eine geplante Route und/oder eine maximale Anzahl zugelassener Folgefahrzeug. Dadurch stehen vorteilhafterweise relevante Informationen für eine zumindest teilweise automatische Führung des Folgefahrzeugs hinter dem Leitfahrzeug zur Verfügung.

Eine von den Verfügbarkeitsdaten umfasste geplante Route des Leitfahrzeugs kann beispielsweise Informationen über eine Zielposition und/oder eine oder mehrere geplante Zwischenpositionen, die auf dem Weg zur Zielposition angefahren werden sollen, umfassen. Ferner können weitere Informationen umfasst sein, beispielsweise über die von der geplanten Route umfassten Straßentypen, das heißt, ob beispielsweise Autobahnen befahren werden sollen.

Es ist vorgesehen, dass durch ein Leitfahrzeug eine Nachführung für mehrere Folgefahrzeuge durchgeführt werden kann. Die für ein Leitfahrzeug maximal zugelassene Anzahl der Folgefahrzeuge kann von verschiedenen Bedingungen abhängen, beispielsweise gesetzlichen Beschränkungen, beispielsweise einer besonderen erforderlichen Beförderungserlaubnis für den Führer des Leitfahrzeugs, technischen Beschränkungen, beispielsweise für bestimmte Fahrzeugtypen als Leit- oder Folgefahrzeuge, oder Präferenzen eines Fahrers, der beispielsweise nur eine bestimmte Anzahl von Fahrzeugen führen will. Zudem kann die maximal zugelassene Anzahl der Folgefahrzeuge von der Domäne abhängen, das heißt beispielsweise, auf Autobahnen und Autostraßen können mehrere Folgefahrzeuge zugelassen sein, während in einer städtischen Umgebung auf definierten Streckenabschnitten eine geringere Anzahl oder, etwa bei dichtem Berufsverkehr, nur ein einziges Folgefahrzeug zugelassen ist.

Insbesondere ist vorgesehen, dass die einem Leitfahrzeug zugeordneten Folgefahrzeuge den Leitfahrzeug bekannt sind, wobei zumindest die Anzahl der gekoppelten und daher nachgeführten Folgefahrzeuge (auch *"platoon members"* genannt) zur Verfügung steht.

Ferner kann vorgesehen sein, dass im Leitfahrzeug weitere Informationen über die zugeordneten Folgefahrzeuge zur Verfügung stehen, beispielsweise über einen Systemzustand oder eine Route, für welche die Nachführung geplant ist.

Alternativ oder zusätzlich können die Verfügbarkeitsdaten ferner Informationen über eine aktuelle Bewegungsrichtung und/oder Geschwindigkeit des Leitfahrzeugs umfassen. Ferner können Informationen über einen Typ und/oder das Modell des Leitfahrzeugs umfasst sein, beispielsweise um zwischen Personenkraftwagen, Lastkraftwagen und Bussen zu unterscheiden. Zudem können Informationen über Präferenzen des Leitfahrzeugs und/oder Voraussetzungen für potentielle Folgefahrzeuge von den Verfügbarkeitsdaten umfasst sein, beispielsweise wenn ein Leitfahrzeug mit Folgefahrzeugen eines bestimmten Typs nicht kompatibel ist.

Die Anfragedaten werden insbesondere durch das Folgefahrzeug erzeugt und bereitgestellt. Die Erfassung der Anfragedaten des Folgefahrzeugs kann auf an sich bekannte Weise erfolgen. Insbesondere werden die Anfragedaten auf die gleiche Weise wie die Verfügbarkeitsdaten erfasst. Das Folgefahrzeug kann dabei die Anfragedaten automatisch bereitstellen, beispielsweise wenn bestimmte Bedingungen erfüllt sind. Ferner können die Anfragedaten manuell bereitgestellt werden, etwa in Abhängigkeit von einer Bedienhandlung eines Fahrers des Folgefahrzeugs. Die Erfassung der Anfragedaten kann durch eine Erfassungseinrichtung erfolgen, insbesondere durch die gleiche Erfassungseinrichtung, durch auch die Erfassung der Verfügbarkeitsdaten erfolgt. Die Erfassung kann dabei mittels einer datentechnischen Verbindung erfolgen, etwa durch ein drahtloses Netzwerk, ein Mobilfunknetz oder mittels anderer an sich bekannter Mittel zur Übertragung von Daten.

Dabei umfassen die Anfragedaten des Folgefahrzeugs eine aktuelle Position und/oder eine geplante Route. Dadurch können besonders relevante Angebotsdaten für das Folgefahrzeug erzeugt werden.

Die Informationen über eine geplante Route des Folgefahrzeugs können etwa Informationen über eine Zielposition und/oder eine oder mehrere geplante Zwischenpositionen, die auf dem Weg zur Zielposition angefahren werden sollen, umfassen. Ferner können weitere Informationen umfasst sein, beispielsweise über die von der geplanten Route umfassten Straßentypen, das heißt, ob beispielsweise Autobahnen befahren werden sollen.

Alternativ oder zusätzlich können die Anfragedaten ferner Informationen über eine aktuelle Bewegungsrichtung und/oder Geschwindigkeit des Folgefahrzeugs umfassen. Ferner können Informationen über einen Typ und/oder das Modell des Folgefahrzeugs umfasst sein, beispielsweise um zwischen PKW, LKW und Bussen zu unterscheiden. Zudem können Informationen über Präferenzen des Folgefahrzeugs und/oder Voraussetzungen für potentielle Leitfahrzeug von den Anfragedaten umfasst sein, beispielsweise wenn ein Folgefahrzeug mit Leitfahrzeug eines bestimmten Typs nicht kompatibel ist.

Bei einer Weiterbildung werden die Anfragedaten automatisch während einer Routenplanung eines Navigationssystems erzeugt. Dadurch können die Anfragedaten vorteilhafterweise so gebildet werden, dass Leitfahrzeuge mit besonders hoher Relevanz für eine konkrete, für das Folgefahrzeug erzeugte Route bestimmt werden können.

Das Navigationssystem ist dabei insbesondere von dem Folgefahrzeug umfasst. Alternativ oder zusätzlich kann vorgesehen sein, dass das Navigationssystem von einem mobilen Nutzergerät umfasst ist, mittels welchem eine Routenplanung für das Folgefahrzeug durchgeführt wird, oder dass die Routenplanung durch eine weitere externe Einheit durchgeführt wird, beispielsweise durch einen externen Server. Im letzteren Fall kann eine geplante Route an das Folgefahrzeug übertragen werden und/oder die Routenplanung kann zu einem Zeitpunkt vor Fahrtantritt außerhalb des Folgefahrzeugs durchgeführt werden, beispielsweise mittels einer Internetseite als Schnittstelle der externen Einheit.

Ferner kann eine Übertragung der Anfragedaten automatisch während der Routenplanung erfolgen, etwa an eine Einheit, die bereits zur Erfassung der Verfügbarkeitsdaten in dem oben erläuterten Schritt des erfindungsgemäßen Verfahrens vorgesehen ist.

Bei einer Ausbildung werden die Anfragedaten anhand einer weiteren Nutzereingabe erzeugt. Alternativ oder zusätzlich erfolgt die Erfassung der Anfragedaten in Abhängigkeit von der weiteren Nutzereingabe. Dies erlaubt vorteilhafterweise, die Erzeugung und/oder Bereitstellung der Anfragedaten gezielt auszulösen, beispielsweise anhand einer Bedienhandlung, die durch eine Einrichtung des Folgefahrzeugs erfasst wird.

Die Angebotsdaten, die erfindungsgemäß anhand der Verfügbarkeitsdaten des zumindest einen Leitfahrzeugs und anhand der Anfragedaten des Folgefahrzeugs erzeugt werden, umfassen Informationen über Leitfahrzeuge, die anhand der Verfügbarkeitsdaten und der Anfragedaten als relevant für das Folgefahrzeug ermittelt werden. also ob für das Folgefahrzeug ein relevantes Leitfahrzeug verfügbar ist. Insbesondere umfassen die Angebotsdaten Informationen, die als Angebote potentieller Leitfahrzeuge zu verstehen sind, die anbieten, die Ankopplung und automatische Nachführung des Folgefahrzeugs zu erlauben. Ferner können Informationen über einen Preis, bestimmte weitere Bedingungen und/oder weitere Informationen über das Leitfahrzeug umfasst sein. Insbesondere umfassen die Angebotsdaten Informationen über mehrere Begleitfahrzeuge, die für eine automatische Führung des Folgefahrzeugs infrage kommen.

Durch eine Angebotsausgabe werden die Angebotsdaten einem Nutzer, insbesondere dem Fahrer des Folgefahrzeugs, ausgegeben. Beispielsweise ist dabei vorgesehen, dass verfügbare, freie Leitfahrzeuge angezeigt werden. Dabei werden insbesondere auch weitere Informationen, etwa die Fahrziele der relevanten Leitfahrzeuge, ausgegeben.

Bei einer weiteren Ausbildung wird beim Ausgeben der Angebotsausgabe eine grafische Darstellung einer Route mit Informationen über das zumindest eine Leitfahrzeug angezeigt. Insbesondere werden Informationen über eine Vielzahl von Leitfahrzeug angezeigt. Dadurch kann vorteilhafterweise die Angebotsausgabe so dargestellt werden, dass potentielle Leitfahrzeuge, die dem Folgefahrzeug eine zumindest teilweise automatische Nachführung erlauben können, auf besonders leicht und schnell erfassbare Weise angezeigt werden.

Insbesondere wird die grafische Darstellung der Angebotsausgabe ferner anhand von Daten eines Navigationssystems erzeugt, welches etwa von dem Folgefahrzeug, einem mobilen Nutzergerät oder einer externen Einrichtung umfasst ist. Dabei umfasst die grafische Darstellung insbesondere eine Repräsentation eines Verkehrswegenetzes, etwa mittels einer gebräuchlichen Kartendarstellung. Die grafische Darstellung kann ferner eine für das Folgefahrzeug geplante Route umfassen, etwa anhand einer Hervorhebung von Verkehrswegen, deren Benutzung beim Befahren der Route geplant ist. Sie kann ferner Informationen über Routen umfassen, die den Leitfahrzeugen zugeordnet sind, sowie über Positionen des Folgefahrzeugs und der Leitfahrzeuge.

Erfindungsgemäß wird in einem weiteren Schritt eine Nutzereingabe erfasst und in Abhängigkeit von der Nutzereingabe werden Annahmedaten erzeugt. Die Annahmedaten können daraufhin an das zumindest eine Leitfahrzeug übertragen werden, wobei die Übertragung auf an sich bekannte Weise direkt an das Leitfahrzeug oder mittelbar über eine externe Einrichtung, etwa einen Server, erfolgen kann. Auf diese Weise kann beispielsweise ein Leitfahrzeug ausgewählt werden, um dieses über einen Andockwunsch des Folgefahrzeugs zu informieren, den das Leitfahrzeug wiederum annehmen kann, beispielsweise in einem sogenannten "*Handshake*"-Verfahren.

Bei einer Weiterbildung wird die Nutzereingabe durch eine Betätigung einer Schaltfläche einer grafischen Bedienoberfläche, durch Betätigung eines analogen Schalters oder anhand eines Sprachkommandos erfasst. Insbesondere wird anhand der Nutzereingabe ein spezifisches potentielles Leitfahrzeug ausgewählt und eine Nachführung des Folgefahrzeugs hinter dem Leitfahrzeug gestartet.

Bei einer Ausbildung wird ferner eine Nachführungsbestätigung des Leitfahrzeugs erfasst und an das Folgefahrzeug übertragen. Dadurch kann vorteilhafterweise eine Bestätigung oder Ablehnung des Leitfahrzeugs berücksichtigt werden, um eine automatische Führung des Folgefahrzeugs durch Nachführen hinter dem Leitfahrzeug zuzulassen.

Insbesondere kann die Nachführungsbestätigung anhand einer Bedienhandlung eines Fahrers des Leitfahrzeugs erfasst werden. Ferner kann eine Ausgabe für das Leitfahrzeug erzeugt und ausgegeben werden, durch die insbesondere dem Fahrer des Leitfahrzeugs mitgeteilt wird, dass Anfragedaten eines Folgefahrzeugs vorliegen. Diese Ausgabe für das Leitfahrzeug kann ferner Informationen über das Folgefahrzeug und/oder seine Fahrt umfassen, etwa über die geplante Route oder Zielposition des Folgefahrzeugs.

Die Übertragung der Nachführungsbestätigung an das Folgefahrzeug kann direkt anhand einer datentechnischen Verbindung zwischen dem Leitfahrzeug und dem Folgefahrzeug oder anhand eines anderen, an sich bekannten Verfahrens, etwa über einen externen Server, erfolgen.

In einem weiteren Schritt werden die Nachführungsdaten erzeugt und an das Folgefahrzeug übertragen. Die Nachführungsdaten umfassen Informationen, welche es dem Folgefahrzeug erlauben, hinter dem Leitfahrzeug zumindest teilweise automatisch zu fahren. Insbesondere wird das Folgefahrzeug anhand der Nachführungsdaten hinter dem Leitfahrzeug in der gleichen Spur geführt. Dazu werden Einrichtungen des Folgefahrzeugs anhand der Nachführungsdaten so angesteuert, dass insbesondere die Richtung und Geschwindigkeit des Folgefahrzeugs entsprechend der Bewegung des Leitfahrzeugs gesteuert werden. Dabei werden insbesondere Einrichtungen zur Veränderung eines Lenkwinkels, einer Beschleunigung oder Verzögerung, eine Fahrwerkssteuerung, eine Getriebesteuerung, eine Steuerung eines elektrischen Antriebs, ein System zur Steuerung eines Energiespeichers und/oder weitere Einrichtungen des Folgefahrzeugs verwendet.

Die erfindungsgemäß erzeugten Nachführungsdaten werden insbesondere durch das Leitfahrzeug erzeugt. Alternativ oder zusätzlich können Nachführungsdaten durch eine weitere Einrichtung, etwa eine externe Nachführungseinrichtung, erzeugt werden. Ferner können Nachführungsdaten alternativ oder zusätzlich durch das Folgefahrzeug selbst erzeugt werden.

Ferner kann vorgesehen sein, dass die Nachführungsdaten durch das Folgefahrzeug erzeugt werden, beispielsweise wenn die Bewegungen des Leitfahrzeugs durch Sensoren des Folgefahrzeugs erfasst werden und die Nachführung anhand dieser Daten erfolgt.

Bei einer weiteren Ausbildung des erfindungsgemäßen Verfahrens umfassen die Nachführungsdaten Informationen zum Führen des Folgefahrzeugs zu einer Zielposition relativ zu dem Leitfahrzeug. Dadurch kann das Folgefahrzeug vorteilhafterweise ausgehend von einer aktuellen Position zu einer für das zumindest teilweise automatische Nachführen geeigneten Position navigiert werden. Insbesondere ist dabei vorgesehen, dass die zumindest teilweise automatische Nachführung erst durchgeführt wird, nachdem das Folgefahrzeug die Zielposition relativ zum Leitfahrzeug erreicht hat.

Das Führen des Folgefahrzeugs zu der Zielposition relativ zu dem Leitfahrzeug erfolgt insbesondere manuell durch den Fahrer des Folgefahrzeugs oder zumindest teilweise automatisch. Beispielsweise können die Nachführungsdaten Informationen umfassen, die dem Fahrer als Navigationshinweise ausgegeben werden, anhand derer er das Folgefahrzeug zu der Zielposition relativ zu dem Leitfahrzeug steuern kann. An dieser Zielposition kann dann die virtuelle Ankopplung des Folgefahrzeugs an das Leitfahrzeug erfolgen, das heißt, nach dem Erreichen der Zielposition kann das Folgefahrzeug automatisch hinter dem Leitfahrzeug geführt werden.

Die Zielposition relativ zu dem Leitfahrzeug kann dabei auf verschiedene Weise bestimmt werden. Beispielsweise kann ein vorgegebener oder flexibel bestimmter räumlicher Versatz relativ zu dem Leitfahrzeug berücksichtigt werden, etwa um die Zielposition in einem bestimmten Abstand hinter dem Leitfahrzeug zu bestimmen. In diesem Fall kann der räumliche Versatz etwa so gewählt werden, dass Sensoren des Folgefahrzeugs Bewegungen des Leitfahrzeugs im Wesentlichen ohne Unterbrechung verfolgen können und/oder eine datentechnische Verbindung zwischen dem Leitfahrzeug und dem Folgefahrzeug nicht unterbrochen wird. Insbesondere kann der Abstand so gewählt werden, dass ein Einscheren eines weiteren Fahrzeugs unterbunden wird oder dass eine Fahrt des Folgefahrzeugs im Windschatten des Leitfahrzeugs oder eines weiteren Folgefahrzeugs ermöglicht wird.

Bei einer weiteren Ausbildung werden während des automatischen Führens des Folgefahrzeugs durch Folgefahrzeugsensoren Umgebungsdaten erfasst und anhand der erfassten Umgebungsdaten werden die Nachführungsdaten plausibilisiert. Dadurch kann vorteilhafterweise die Sicherheit der Fahrt verbessert werden, indem die Sicherheit der Fahrt anhand von Daten, die durch Sensoren des Folgefahrzeugs erfasst werden, überwacht wird. Insbesondere kann die automatische Führung des Folgefahrzeugs abgebrochen werden, wenn festgestellt wird, dass die Nachführungsdaten nicht mit der tatsächlichen Bewegung des Leitfahrzeugs übereinstimmen oder dass eine automatische Fahrt anhand der Nachführungsdaten zu einer gefährlichen Situation für das Folgefahrzeug führen würde. Die Kontrolle über das Folgefahrzeug kann in diesem Fall an einen Fahrer des Folgefahrzeugs zurückgegeben werden und/oder es kann ein sicherer Fahrmodus eingeleitet werden, bei dem beispielsweise die Geschwindigkeit des Folgefahrzeugs verringert und eine sichere Halteposition angefahren wird.

Bei einer Weiterbildung wird ferner durch ein Bezahlmodul ein Nachführungspreis bestimmt und ein dem Folgefahrzeug zugeordnetes Konto wird in Abhängigkeit von dem bestimmten Nachführungspreis belastet. Dies geschieht insbesondere abhängig von der Strecke, auf der das Folgefahrzeug automatisch hinter dem Leitfahrzeug gesteuert wird, und/oder abhängig von einem Typ des Leit- oder Folgefahrzeugs.

Das erfindungsgemäße Verfahren kann auf diese Weise dazu genutzt werden, die Nutzung eines Leitfahrzeugs zum automatischen Folgen durch das Leitfahrzeug als kostenpflichtige Dienstleistung zu implementieren. Beispielsweise können für die Nutzung des Leitfahrzeugs Kosten für das Folgefahrzeug anfallen, während für das Führen des Leitfahrzeugs eine Bezahlung gewährt wird.

Beispielsweise können bestimmte Fahrzeuge als Leitfahrzeuge genutzt werden, die beispielsweise Taxi-, Bus- oder Logistikunternehmen zugeordnet sind. In diesem Fall kann zudem vorgesehen sein, dass ein Leitfahrzeug für die Nutzung durch ein Folgefahrzeug reserviert werden kann, beispielsweise auf einen bestimmten Streckenabschnitt. Ferner kann vorgesehen sein, dass ein Leitfahrzeug angefordert wird, um dem Folgefahrzeug eine zumindest teilweise automatische Führung entlang einer bestimmten Strecke zu ermöglichen. So könnte etwa ein Leitfahrzeug angefordert werden, um einen Nutzer von einer bestimmten Startposition abzuholen und zu einer bestimmten Zielposition zu führen, wobei für den Nutzer des Folgefahrzeugs der Komfort des eigenen Fahrzeugs statt der Nutzung eines fremden Fahrzeugs gewährleistet wird.

Möglich sind ferner verschiedene Bezahlungsmodelle, beispielsweise eine kostenlose Nutzung von Leitfahrzeugen, mit denen das Folgefahrzeug spontan eine automatische Führung eines Leitfahrzeugs initiieren kann, sowie eine kostenpflichtige Reservierung oder Bereitstellung von Leitfahrzeug für geplante Routen. Dabei kann vorgesehen sein, dass für eine Zahlung eines Pauschalpreises (Flatrate) Dienste bestimmter Leitfahrzeuge in beliebigem Umfang genutzt werden können. Zudem kann vorgesehen sein, dass eine besondere Fahrspur, vergleichbar etwa einer bekannten Busspur, exklusiv für die automatische Nachführung freigegeben wird, um den Verkehrsfluss zu steuern oder bei besonderen Veranstaltungen für geordnete Verhältnisse zu sorgen, etwa wenn eine Durchfahrt nur in Verbindung mit einer automatischen Nachführung zugelassen wird. Auch die Nutzung einer solchen Fahrspur kann kostenpflichtig gestaltet werden.

Beispielsweise kann eine Vermittlung der automatischen Nachführung über ein Portal erfolgen, welches Daten über Leitfahrzeuge sowie über deren aktuell befahrene oder in der Zukunft geplante Routen bereitstellen und bestimmte Leitfahrzeuge für potentielle Folgefahrzeuge kostenpflichtig reservieren kann. Insbesondere kann eine Reservierung für Abschnitte der Routen erfolgen. Insbesondere kann dabei auch unabhängig von einem bestimmten Folgefahrzeug, das ein Fahrer benutzt, eine Bindung an das Portal erreicht werden. Ferner können weitere kostenpflichtige Dienste angeboten werden, beispielsweise indem ein Leitfahrzeug für einen bestimmten, vordefinierten Streckenabschnitt exklusiv zur Buchung angeboten und gegebenenfalls bereitgestellt wird. Die Bereitstellung der Leitfahrzeug kann durch beliebige Anbieter erfolgen, wobei die Vermittlung zentral über das Portal erfolgt. Auf diese Weise können verschiedene Modelle der Preisgestaltung, etwa mittels Flatrates, realisiert werden.

Bei einer Weiterbildung werden die Verfügbarkeitsdaten durch eine Vermittlungseinrichtung erfasst und gespeichert und die Angebotsdaten werden durch die Vermittlungseinrichtung erzeugt. Dadurch kann vorteilhafterweise eine zentrale Verwaltung von Verfügbarkeitsdaten eines Leitfahrzeugs und insbesondere einer Vielzahl von Leitfahrzeugen erfolgen, beispielsweise durch einen externen Server, zu dem Folgefahrzeuge und Leitfahrzeuge eine datentechnische Verbindung aufbauen können.

Insbesondere können die durch die Vermittlungseinrichtung gespeicherten Verfügbarkeitsdaten fortlaufend aktualisiert werden, beispielsweise durch die Löschung von Verfügbarkeitsdaten, die vor einem bestimmten Zeitpunkt erfasst worden. Dadurch können Informationen über die Verfügbarkeit von Leitfahrzeugen sowie über die Leitfahrzeuge selbst ständig aktuell bereitgehalten werden. Werden nun die Anfragedaten des Folgefahrzeugs empfangen, so können die Angebotsdaten anhand der gespeicherten Verfügbarkeitsdaten erzeugt werden. Beispielsweise kann bestimmt werden, welche Leitfahrzeuge sich in erreichbarer Nähe des Folgefahrzeugs befinden und einen Streckenabschnitt befahren, der für das Folgefahrzeug relevant ist. Ferner kann bestimmt werden, welche Leitfahrzeuge das gleiche Ziel haben oder den gleichen Streckenabschnitt befahren wie das Folgefahrzeug. Ferner kann bewertet werden, wie gut verschiedene Leitfahrzeuge zu den Anfragedaten des Folgefahrzeugs passen. Dabei wird etwa ein Leitfahrzeug als am besten geeignet bewertet, wenn eine sofortige Übernahme der Nachführung des Folgefahrzeugs bis zu dessen Zielposition möglich ist, während ein anderes Leitfahrzeuge weniger geeignet ist, das lediglich die Nachführung entlang eines Teilabschnitts der für das Folgefahrzeug geplante Route durchführen kann oder das sich von dem Folgefahrzeug entfernt befindet, sodass dieses zunächst zu einer Zielposition relativ zu dem Leitfahrzeug gesteuert werden muss, etwa durch den Fahrer des Folgefahrzeugs.

Bei einer Ausbildung werden die Anfragedaten automatisch erzeugt und übertragen, wenn eine Registrierung des Folgefahrzeugs für die Vermittlungseinrichtung registriert wurde. Dadurch kann die Vermittlungseinrichtung vorteilhafterweise als Portal zur Vermittlung einer automatischen Nachführung betrieben werden, wobei Folgefahrzeuge und gegebenenfalls auch Leitfahrzeuge durch ein an sich bekanntes Registrierungsverfahren identifiziert werden, etwa durch einen Login oder ein anderes Authentifizierungsverfahren. Dies erleichtert auch die oben erläuterte Ausgestaltung einer Erhebung von Kosten für die Nachführung.

Insbesondere erfolgt die Registrierung bei der Planung der Route des Folgefahrzeugs, sodass Leitfahrzeuge, die dem Folgefahrzeug eine zumindest teilweise automatische Fahrt entlang der geplanten Route ermöglichen können, im Voraus geplant und gegebenenfalls reserviert oder bereitgestellt werden können. Das Folgefahrzeug kann dabei dauerhaft für die Vermittlungseinrichtung registriert sein oder es kann eine einmalige Registrierung, beispielsweise bei einer Routenplanung, vorgenommen werden. Insbesondere kann eine datentechnische Verbindung zwischen dem Folgefahrzeug und der Vermittlungseinrichtung in Abhängigkeit von der Registrierung dauerhaft, zeitweise oder zu bestimmten Zeitpunkten hergestellt werden.

Bei einer weiteren Ausbildung werden die Annahmedaten von dem Folgefahrzeug an die Vermittlungseinrichtung übertragen und durch die Vermittlungseinrichtung wird eine datentechnische Verbindung des Folgefahrzeugs zu dem Leitfahrzeug hergestellt. Diese Verbindung kann dabei direkt oder indirekt über die Vermittlungseinrichtung hergestellt werden. Dadurch kann vorteilhafterweise durch die Vermittlungseinrichtung eine datentechnische Verbindung auch mit Leitfahrzeugen hergestellt werden, welche keinen direkten Verbindungsaufbau zu Folgefahrzeugen erlauben, beispielsweise aus Sicherheitsgründen.

Bei einer Weiterbildung wird die Angebotsausgabe durch die Vermittlungseinrichtung erzeugt und an das Folgefahrzeug übertragen. Dies geschieht insbesondere alternativ zu einer Erzeugung der Angebotsausgabe durch das Folgefahrzeug selbst. Dadurch kann vorteilhafterweise die Verarbeitung der Angebotsdaten durch das Folgefahrzeug erleichtert werden. Beispielsweise wird eine Angebotsausgabe mit Grafikdaten an das Folgefahrzeug übertragen und dort von diesem ausgegeben.

Das erfindungsgemäße System der eingangs genannten Art umfasst eine Erfassungseinheit, durch die Verfügbarkeitsdaten zumindest eines Leitfahrzeugs und Anfragedaten des Folgefahrzeugs erfassbar sind. Es umfasst ferner eine Angebotseinheit, durch die anhand der Verfügbarkeitsdaten und der Anfragedaten Angebotsdaten über das Leitfahrzeug erzeugbar und an das Folgefahrzeug übertragbar sind, sowie eine Recheneinheit, durch die anhand der Angebotsdaten eine Angebotsausgabe erzeugbar ist, und eine Ausgabeeinheit, durch die die Angebotsausgabe ausgebbar ist. Es umfasst zudem eine Eingabeeinheit, durch die eine Nutzereingabe erfassbar ist, wobei anhand der Nutzereingabe Annahmedaten erzeugbar sind. Es umfasst außerdem eine Nachführungseinheit, durch die Nachführungsdaten erzeugbar und an das Folgefahrzeug übertragbar sind, sowie eine Steuerungseinheit, durch die das Folgefahrzeug anhand der Nachführungsdaten zumindest teilweise automatisch hinter dem Leitfahrzeug führbar ist.

Das erfindungsgemäße System ist insbesondere ausgebildet, das vorstehend beschriebene erfindungsgemäße Verfahren zu implementieren. Das System weist somit dieselben Vorteile auf wie das erfindungsgemäße Verfahren.

Bei einer Ausbildung des erfindungsgemäßen Systems ist ferner durch ein Navigationssystem eine geplante Route des Folgefahrzeugs erzeugbar und die Anfragedaten sind automatisch anhand der geplanten Route erzeugbar. Dadurch kann vorteilhafterweise ein geeignetes Leitfahrzeug zum Nachführen des Folgefahrzeugs verwendet werden.

Die Erfindung wird nun anhand von Ausführungsbeispielen mit Bezug zu den Zeichnungen erläutert.
- Figur 1: zeigt eine Verkehrssituation, in welcher das erfindungsgemäße Verfahren ausgeführt werden kann,
- Figur 2: zeigt ein Netzwerk zwischen Fahrzeugen und einer Vermittlungseinrichtung für das erfindungsgemäße Verfahren und
- Figur 3: zeigt ein Ausführungsbeispiel des erfindungsgemäßen Systems.

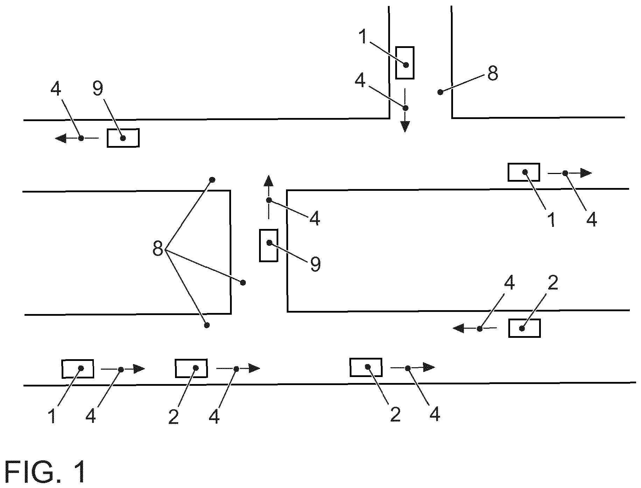

Mit Bezug zu Figur 1 wird eine Verkehrssituation erläutert, in welcher das erfindungsgemäße Verfahren ausgeführt werden kann.

Dargestellt ist ein Verkehrswegenetz 8, auf dem sich eine Vielzahl von Fahrzeugen befindet, deren jeweilige Fahrtrichtungen durch Pfeile 4 angedeutet sind. Darunter befinden sich Folgefahrzeuge 1, Leitfahrzeuge 2 und weitere Fahrzeuge 9. Diese Unterscheidung bezieht sich auf eine unterschiedliche technische Ausstattung der jeweiligen Fahrzeuge, die eine automatische Nachführung der Folgefahrzeuge 1 durch Leitfahrzeuge 2 ermöglicht, während die weiteren Fahrzeuge 9 über keine geeignete Ausstattung verfügen und daher weder als Leitfahrzeuge 2, noch als Folgefahrzeuge 1 in Erscheinung treten.

Durch das erfindungsgemäße Verfahren, das unten im Detail erläutert wird, werden den Folgefahrzeugen 1 Informationen über jeweils relevante Leitfahrzeuge 2 bereitgestellt und es kann eine automatische Nachführung eines Folgefahrzeugs 1 hinter jeweils einem Leitfahrzeug 2 initiiert werden. Eine Herausforderung besteht dabei darin, wie in Figur 1 erkennbar, dass nicht alle Leitfahrzeuge 2 für die automatische Führung aller Folgefahrzeuge 1 infrage kommen, beispielsweise weil sie in verschiedene Richtungen 4 fahren und/oder unterschiedliche Routen geplant haben. Ferner können weitere Bedingungen vorliegen, die beim Durchführen einer Nachführung zu berücksichtigen sind, etwa verschiedene Fahrzeugtypen. Die Erfindung sieht daher vor, dass Anfragedaten der Folgefahrzeuge 1 und Verfügbarkeitsdaten der Leitfahrzeuge 2 erfasst werden und den Folgefahrzeugen 1 jeweils für sie relevante Angebotsdaten bereitgestellt werden, anhand derer die weitere Etablierung einer automatischen Nachführung erfolgen kann.

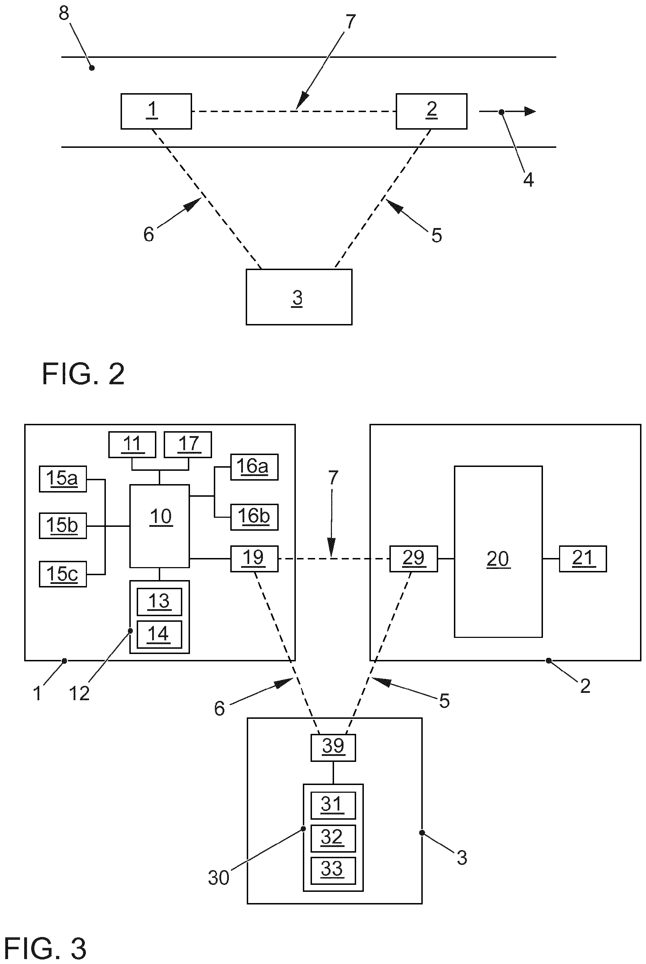

Der bei dem erfindungsgemäßen Verfahren vorgesehene Austausch von Daten erfolgt insbesondere über ein Netzwerk, das bei dem nachfolgend erläuterten Ausführungsbeispiel eine Vermittlungseinrichtung umfasst. Mit Bezug zu Figur 2 wird ein solches Netzwerk zwischen Fahrzeugen und einer Vermittlungseinrichtung für das erfindungsgemäße Verfahren erläutert. Auf der Straße 8 befindet sich das Folgefahrzeug 1, das in Fahrtrichtung 4 hinter dem Leitfahrzeug 2 fährt. Zwischen dem Folgefahrzeug 1 und dem Leitfahrzeug 2 besteht eine durch eine gestrichelte Linie angedeutete datentechnische Verbindung 7.

Vorgesehen ist ferner eine Vermittlungseinrichtung 3, die durch eine erste datentechnische Verbindung 6 mit dem Folgefahrzeug 1 und durch eine zweite datentechnische Verbindung 5 mit dem Leitfahrzeug 2 verbunden ist. Die datentechnischen Verbindungen 5, 6, 7 können dabei auf unterschiedliche, an sich bekannte Weisen hergestellt werden, insbesondere mittels eines Mobilfunknetzes. Zudem kann vorgesehen sein, dass verschiedene Verbindungstypen nebeneinander genutzt werden, etwa durch gleichzeitige Nutzung von verschiedenen datentechnischen Verbindungstypen, die als Car2Car-und Car2lnfrastructure-Verbindungen bezeichnet werden. Ferner kann eine datentechnische Verbindung 5, 6, 7 mittels einer redundanten, gleichzeitigen Verwendung mehrerer Verbindungstypen hergestellt werden.

In weiteren Ausführungsbeispielen ist vorgesehen, dass die datentechnische Verbindung 7 zwischen dem Folgefahrzeug 1 und dem Leitfahrzeug 2 mittelbar über die Vermittlungseinrichtung 3 hergestellt wird, wobei die direkte Verbindung 7 in diesem Fall durch die datentechnische Verbindung 6 des Folgefahrzeugs 1 und die datentechnische Verbindung 5 des Leitfahrzeugs 2 mit der Vermittlungseinrichtung 3 ersetzt wird. Die datentechnischen Verbindungen 5, 6, 7 können in weiteren Ausführungsbeispielen auch auf andere Art hergestellt werden.

Die skizzenhafte Darstellung der Figur 2 ist dabei, insbesondere bezüglich der dargestellten Abstände, nicht maßstäblich zu verstehen.

Mit Bezug zu den Figuren 2 und 3 wird ein Ausführungsbeispiel des erfindungsgemäßen Systems im Detail erläutert. Dabei wird von einer Verkehrssituation wie der oben mit Bezug zu Figur 1 erläuterten ausgegangen.

Das Folgefahrzeug 1 umfasst eine Steuerungseinheit 10, mit der eine Recheneinheit 11, ein Navigationssystem 17 und eine Kommunikationseinheit 19 gekoppelt sind. Ferner ist mit der Steuerungseinheit 10 ein Touchscreen 12 gekoppelt, der eine Ausgabeeinheit 13 und eine Eingabeeinheit 14 umfasst. Die Ausgabeeinheit 13 ist dabei als Anzeigefläche ausgebildet, während die Eingabeeinheit 14 eine berührungsempfindliche Oberfläche umfasst, die sich über die Anzeigefläche der Ausgabeeinheit 13 erstreckt.

Das Folgefahrzeug 1 umfasst ferner mit der Steuerungseinheit 10 gekoppelte Fahrerassistenzsysteme 15a, 15b, 15c, die auf an sich bekannte Weise gebildet sind. Beispielsweise kann ein Spurhalteassistent, eine Geschwindigkeitsregelanlage, ein Abstandregeltempomat, ein Spurwechselassistent, eine automatische Steuerung eines Getriebes, eine Fahrwerksteuerung und/oder ein anderes System umfasst sein. Außerdem sind Folgefahrzeugsensoren 16a, 16b mit der Steuerungseinheit 10 gekoppelt, die ebenfalls auf an sich bekannte Weise gebildet sind. Beispielsweise können Systeme zur Detektionen basierend auf Ultraschall, Radar, Lidar und/oder Kameras zur Erfassung von Infrarot- und sichtbarem Licht vorgesehen sein.

Die Fahrerassistenzsysteme 15a, 15b, 15c unterstützen einen Fahrer beim Fahren des Folgefahrzeugs 1 auf verschiedene Weise zumindest teilweise automatisch. Ohne die Fahrerassistenzsysteme 15a, 15b, 15c beeinflusst der Fahrer direkt die Bewegung des Folgefahrzeugs 1. Es werden allenfalls Signale oder Bewegungen von durch den Fahrer betätigten Bedienelementen, wie der Pedalerie, dem Schaltknüppel oder dem Lenkrad, an entsprechende Einrichtungen übertragen, welche die Fortbewegung des Folgefahrzeugs 1 beeinflussen. Eine derartige Fortbewegung des Folgefahrzeugs 1 entspricht dem geringsten Grad der Automatisierung. Bei einem höheren Grad der Automatisierung wird zum Teil automatisch in Einrichtungen eingegriffen, welche der Fortbewegung des Folgefahrzeugs 1 dienen. Beispielsweise wird in die Lenkung des Folgefahrzeugs 1 oder die Beschleunigung positiver oder negativer Richtung eingegriffen. Bei einem noch höheren Grad der Automatisierung, der allerdings mit erheblichem technischen Aufwand für Sensor- uns Steuerungssysteme verbunden ist, wird soweit in Einrichtungen des Folgefahrzeugs 1 eingegriffen, dass zum Beispiel Routen eines Navigationssystems im Wesentlichen automatisch gefahren werden können.

Es sei an dieser Stelle darauf hingewiesen, dass der Fahrer zwar mit der Wahl eines hohen Grades der Automatisierung die Kontrolle über die Fahrzeugführung in zunehmendem Maße abgeben kann. Er kann diese Kontrolle jedoch durch aktives Lenken oder Betätigen der Pedalerie sofort wieder zurückgewinnen.

Die Erfindung sieht insbesondere einen mittleren Grad der Automatisierung bei der Fahrt des Folgefahrzeugs 1 vor, der mit relativ begrenzten technischen Mitteln erreichbar ist. Bei dem Ausführungsbeispiel sind daher die Fahrerassistenzsysteme 15a, 15b, 15c des Folgefahrzeugs 1 so ausgelegt, dass keine vollkommen autonome Führung im Sinne eines höchsten Grades der Automatisierung erfolgen kann, dass jedoch so viele Eingriffe in die Führung des Folgefahrzeugs 1 durch die Fahrerassistenzsysteme 15a, 15b, 15c vorgenommen werden können, dass mit Hilfe von extern bereitgestellten Nachführungsdaten eine automatische Führung hinter dem Leitfahrzeug 2 durchgeführt werden kann.

Die Fahrerassistenzsysteme 15a, 15b, 15c sind ferner so ausgebildet, dass eine Überwachung sicherheitsrelevanter Aspekte der Fahrt des Folgefahrzeugs 1 durchgeführt werden kann, etwa ein Abstand zu anderen Verkehrsteilnehmern und/oder anderen Gefahrenquellen, eine Übereinstimmung der Geschwindigkeit mit vorgeschriebenen Gefälligkeitsbeschränkungen, das Einhalten einer vorgegebenen Fahrspur auf der Straße 8 und/oder andere Aspekte.

Das Leitfahrzeug 2 umfasst eine Steuerungseinheit 20, mit der eine Kommunikationseinheit 29 und eine Nachführungseinheit 21 gekoppelt sind. Bei dem Ausführungsbeispiel wird das Leitfahrzeug 2 durch einen menschlichen Fahrer gesteuert, der gegebenenfalls durch Fahrerassistenzsysteme des Leitfahrzeugs 2 unterstützt wird. In weiteren Ausführungsbeispielen kann vorgesehen sein, dass das Leitfahrzeug 2 vollautomatisch geführt wird.

Zwischen dem Folgefahrzeug 1 und dem Leitfahrzeug 2 wird mittels der jeweiligen Kommunikationseinheiten 19, 29 eine datentechnische Verbindung 7 hergestellt. Wie oben bereits erläutert, kann diese datentechnische Verbindung 7 auf verschiedene an sich bekannte Weisen hergestellt werden, wobei insbesondere eine dauerhafte oder zeitweise datentechnische Verbindung 7 bestehen kann. Die datentechnische Verbindung 7 kann direkt oder über eine weitere Einheit hergestellt werden, etwa bei einer durch einen Mobilfunknetz vermittelten datentechnischen Verbindung 7.

Die Vermittlungseinrichtung 3 umfasst ebenfalls eine Kommunikationseinheit 39, die mit einer Steuerungseinheit 30 gekoppelt ist. Die Steuerungseinheit 30 der Vermittlungseinrichtung 3 umfasst eine Erfassungseinheit 31, eine Angebotseinheit 32 und ein Bezahlmodul 33.

Durch die Kommunikationseinheit 39 der Vermittlungseinrichtung 3 sind datentechnische Verbindungen 5, 6 zu dem Leitfahrzeug 2 beziehungsweise dem Folgefahrzeug 1 herstellbar. Auch dies kann, wie oben bereits erläutert, auf verschiedene, an sich bekannte Weisen erfolgen.

Mit Bezug zu den Figuren 2 und 3 wird ein Ausführungsbeispiel des erfindungsgemäßen Verfahrens erläutert. Dabei wird von dem oben erläuterten Ausführungsbeispiel des erfindungsgemäßen Systems ausgegangen und dieses im Detail erläutert.

In einem ersten Schritt werden Verfügbarkeitsdaten des Leitfahrzeugs 2 erfasst. Bei dem Ausführungsbeispiel wird dies durch die Erfassungseinheit 31 der Vermittlungseinrichtung 3 durchgeführt, wobei mittels der Kommunikationseinrichtung 39 eine datentechnische Verbindung 5 zu dem Leitfahrzeug 2 hergestellt wird. Durch das Leitfahrzeug 2 werden dann Verfügbarkeitsdaten bereitgestellt, welche die aktuelle Position und die geplante Route des Leitfahrzeugs 2 umfassen. Ferner ist eine Information des Leitfahrzeugs 2 darüber umfasst, wie viele Folgefahrzeug 1 maximal durch das Leitfahrzeug 2 nachgeführt werden dürfen.

Im allgemeinen Fall werden die Verfügbarkeitsdaten von einer Vielzahl von Leitfahrzeugen 2 erfasst, beispielsweise von allen Leitfahrzeugen 2, die bei der Vermittlungseinrichtung 3 registriert sind. In weiteren Ausführungsbeispielen kann zudem vorgesehen sein, dass Verfügbarkeitsdaten für Leitfahrzeuge 2 erfasst werden, die aktuell eine bestimmte Route befahren, die eine Fahrt zu einem zukünftigen Zeitpunkt geplant haben und/oder die bei Bedarf eine Route befahren können beispielsweise auf Bestellung.

In verschiedenen Ausführungsformen der Erfindung kann die Erfassung der Verfügbarkeitsdaten auf unterschiedliche Weise erfolgen, beispielsweise durch eine Anfrage der Vermittlungseinrichtung 3 an das Leitfahrzeug 2 und/oder durch eine automatische Übertragung der Verfügbarkeitsdaten des Leitfahrzeugs 2 an die Vermittlungseinrichtung 3. Zudem kann vorgesehen sein, dass Verfügbarkeitsdaten anhand einer Eingabe eines Nutzers durchgeführt wird, beispielsweise durch eine Eingabe der relevanten Daten über eine Schnittstelle, etwa eine Webseite, der Erfassungseinheit 31.

Durch die Erfassungseinheit 31 der Vermittlungseinrichtung 3 werden zudem Anfragedaten des Folgefahrzeugs 1 erfasst. Die Anfragedaten können auf ähnliche Weise durch das Folgefahrzeug 1 erzeugt und durch die Erfassungseinheit 31 erfasst werden wie oben für die Verfügbarkeitsdaten des Leitfahrzeugs 2 beschrieben. Insbesondere umfassen die Anfragedaten des Folgefahrzeugs die aktuelle Position und die geplante Route des Folgefahrzeugs 1. Die Anfragedaten werden bei dem Ausführungsbeispiel automatisch erzeugt, während eine Routenplanung mittels des Navigationssystems 17 des Folgefahrzeugs 1 durchgeführt wird. In weiteren Ausführungsbeispielen kann vorgesehen sein, dass die Anfragedaten erzeugt werden, wenn ein Nutzer, etwa der Fahrer des Folgefahrzeugs 1, eine bestimmte Eingabe vornimmt, etwa durch Bedienen einer Einrichtung des Folgefahrzeugs 1, mittels eines mobilen Nutzergeräts und/oder anhand einer Eingabe der relevanten Daten über eine Schnittstelle der Erfassungseinheit 31.

In einem weiteren Schritt werden anhand der Verfügbarkeitsdaten und der Anfragedaten Angebotsdaten über das Leitfahrzeug 2 erzeugt und an das Folgefahrzeug 1 übertragen. Die Erzeugung der Angebotsdaten erfolgt bei dem Ausführungsbeispiel durch die Angebotseinheit 32 der Vermittlungseinrichtung 3 und die Übermittlung der Angebotsdaten erfolgt über die datentechnische Verbindung 6.

Die Angebotsdaten umfassen Informationen über Leitfahrzeuge 2, die anhand der Verfügbarkeitsdaten und der Anfragedaten als relevant für das Folgefahrzeug 2 ermittelt wurden. Insbesondere werden solche Leitfahrzeuge 2 berücksichtigt, die sich in einer räumlichen Nähe zu dem Folgefahrzeug 1 befinden und eine zumindest ähnliche oder die gleiche Route wie das Folgefahrzeug 1 befahren. Beispielsweise können die Angebotsdaten Informationen über Leitfahrzeuge 2 umfassen, die zumindest einen Abschnitt der für das Folgefahrzeug 1 geplanten Route zum gleichen Zeitpunkt wie das Folgefahrzeug 1 befahren oder die ihre Bereitschaft signalisiert haben, diesen Abschnitt der Route zu befahren.

Anhand der Angebotsdaten wird eine Angebotsausgabe erzeugt und im Folgefahrzeug 1 durch die Ausgabeeinheit 13 ausgegeben. Insbesondere wird dabei eine grafische Darstellung erzeugt, die eine Repräsentation eines Verkehrswegenetzes mit der für das Folgefahrzeug 1 geplanten Route sowie mit Informationen über die Leitfahrzeuge 2 umfasst. Die Informationen über die Leitfahrzeuge 2 betreffen Informationen darüber, welche Route befahren wird, welche Anforderungen an potentielle Folgefahrzeug 1 gestellt werden, welche verschiedenen Typen von Leitfahrzeug 2 zur Verfügung stehen sowie andere relevante Informationen.

In einem weiteren Schritt wird eine Nutzereingabe erfasst und anhand der Nutzereingabe werden Annahmedaten erzeugt. Bei dem Ausführungsbeispiel erfolgt die Ausgabe mittels des Touchscreens 12, dessen Eingabeeinheit 14 als berührungsempfindliche Oberfläche ausgebildet ist. Auf diese Weise kann eine Nutzereingabe anhand einer direkten Bedienung von Schaltflächen einer grafischen Bedienoberfläche vorgenommen werden, von welcher die Angebotsausgabe umfasst ist. In weiteren Ausführungsbeispielen, bei denen die Erzeugung der Anfragedaten automatisch durch das Navigationssystem 17 erfolgt, kann die Nutzereingabe beispielsweise eine Bestätigung einer Routenplanung durch den Nutzer umfassen. In anderen Ausführungsbeispielen kann die Nutzereingabe auf andere Weise erfasst werden.

Die erzeugten Annahmedaten umfassen insbesondere eine Information darüber, dass eine automatische Führung des Folgefahrzeugs 1 durch das Leitfahrzeug 2 gestartet werden soll. Ferner können weitere Informationen umfasst sein, beispielsweise welche Route oder welchen Streckenabschnitt die Annahmedaten betreffen.

Die Annahmedaten werden in dem Ausführungsbeispiel mittelbar über die Vermittlungseinrichtung 3 an das Leitfahrzeug 2 übertragen. In weiteren Ausführungsbeispielen können Annahmedaten alternativ oder zusätzlich über eine direkte Übertragung mittels derer datentechnischen Verbindung 7 zwischen dem Folgefahrzeug 1 und dem Leitfahrzeug 2 übertragen werden. Insbesondere ist in diesem Fall eine Identifikation des Leitfahrzeugs 2 notwendig, beispielsweise anhand der von den Angebotsdaten umfassten Informationen, um die datentechnische Verbindung 7 aufbauen zu können.

In einem weiteren Ausführungsbeispiel ist zudem vorgesehen, dass eine Nachführungsbestätigung des Leitfahrzeugs 2 erfasst und an das Folgefahrzeug 1 übertragen wird. Dies kann beispielsweise anhand einer Eingabe eines Fahrers des Leitfahrzeugs 2 erfolgen, durch die zugestimmt wird, das Folgefahrzeug 1 hinter dem Leitfahrzeug 2 zu führen. Ferner kann vorgesehen sein, dass eine Kommunikation zwischen Insassen des Leitfahrzeugs 2 und des Folgefahrzeugs 1 hergestellt wird, beispielsweise mittels Sprachnachrichten, Textnachrichten oder auf andere Weise. Auch die Nachführungsbestätigung kann direkt von dem Leitfahrzeug 2 an das Folgefahrzeug 1 übertragen oder über die Vermittlungseinrichtung 3 verwaltet werden.

Um das Folgefahrzeug 1 automatisch hinter dem Leitfahrzeug 2 zu führen, werden Nachführungsdaten erzeugt und an das Folgefahrzeug 1 übertragen. Bei dem Ausführungsbeispiel erfolgt diese Erzeugung durch das Leitfahrzeug 2. Alternativ oder zusätzlich können Nachführungsdaten jedoch auch durch die Vermittlungseinrichtung 3 erzeugt und bereitgestellt werden. Die Übertragung der Nachführungsdaten erfolgt bei dem Ausführungsbeispiel direkt über die datentechnische Verbindung 7 von dem Leitfahrzeug 2 an das Folgefahrzeug 1, alternativ oder zusätzlich kann eine mittelbare Übertragung, insbesondere über die Vermittlungseinrichtung 3, erfolgen.

Die Nachführungsdaten umfassen Informationen zu einer Zielposition des Folgefahrzeugs 1 relativ zu dem Leitfahrzeug 2. Bei der in Figur 2 gezeigten Situation ist vorgesehen, dass sich das Folgefahrzeug 1 in kurzem Abstand hinter dem Leitfahrzeug 2 befindet. Wird nun die automatische Führung des Folgefahrzeugs 2 gestartet, werden auf an sich bekannte Weise anhand der Nachführungsdaten Informationen bereitgestellt, die es den Fahrerassistenzsystemen 15a, 15b, 15c des Folgefahrzeugs 1 erlauben, die Bewegung des Folgefahrzeugs 1 so zu steuern, dass die vorgegebene Position relativ zu dem Leitfahrzeug 2 eingenommen wird. Dies kann beispielsweise eine Position in einem bestimmten Abstand hinter dem Leitfahrzeug 2 sein, wobei bei dem Ausführungsbeispiel vorgesehen ist, dass ein geringer Abstand so eingenommen wird, dass ein Einscheren anderer Fahrzeuge zwischen dem Folgefahrzeug 1 und dem Leitfahrzeug 2 vermieden wird. In weiteren Ausführungsbeispielen kann die Position des Folgefahrzeugs 1 relativ zum Leitfahrzeug 2 auf andere Weise gebildet sein, beispielsweise mit einem seitlichen Versatz relativ zu der von dem Leitfahrzeug 2 befahrenen Trajektorie oder so, dass Energieeinsparungen durch Fahren des Folgefahrzeugs 1 im Windschatten des Leitfahrzeugs 2 oder weiterer Folgefahrzeuge 1 optimiert werden.

Bei dem Ausführungsbeispiel ist ferner vorgesehen, dass die Nachführungsdaten Informationen darüber umfassen, wie das Folgefahrzeug 1 die Position relativ zu dem Leitfahrzeug 2 erreichen kann, insbesondere auch dann, wenn die Position vor dem Beginn der automatischen Nachführung erreicht werden muss. Dies ist insbesondere dann relevant, wenn ein größerer räumlicher Abstand zwischen dem Folgefahrzeug 1 und dem Leitfahrzeug 2 besteht, sodass das Folgefahrzeug 1 nicht sofort direkt hinter dem Leitfahrzeug 2 geführt werden kann. In diesem Fall ist es notwendig, das Folgefahrzeug 1 so zu führen, dass es eine bestimmte Zielposition relativ zu dem Leitfahrzeug 2 erreicht, von der an die automatische Nachführung gestartet werden kann. Diese Führung kann auf verschiedene an sich bekannte Weisen durchgeführt werden, insbesondere unterstützt durch eine Ausgabe von Navigationshinweisen an den Fahrer des Folgefahrzeugs 2. In einem weiteren Beispiel kann dem Fahrer des Folgefahrzeugs 1 angezeigt werden, dass ein Leitfahrzeug 2 erst zu einem zukünftigen Zeitpunkt bereitgestellt werden kann, etwa wenn das Leitfahrzeug 2 erst angefordert werden muss oder es sich auf der Route an einer Position hinter dem Folgefahrzeug 2 befindet. In diesem Fall können Hinweise für eine manuelle oder zumindest teilweise automatische Führung des Folgefahrzeugs 2 erzeugt werden, durch die das Folgefahrzeug 2 auf das Leitfahrzeug 1 wartet, beispielsweise durch Anfahren eines Parkplatzes oder durch Verringern der Geschwindigkeit des Folgefahrzeugs 2, um ein Überholen des Leitfahrzeugs 1 zu ermöglichen.

Das Folgefahrzeug 1 wird nun automatisch hinter dem Leitfahrzeug 2 geführt und der Fahrer des Folgefahrzeugs 1 kann beispielsweise Nebentätigkeiten ausführen, etwa lesen oder telefonieren. Während der automatischen Nachführung hinter dem Leitfahrzeug 2 werden durch die Folgefahrzeugsensoren 16a, 16b Umgebungsdaten erfasst und anhand der erfassten Umgebungsdaten werden die Nachführungsdaten plausibilisiert. Dabei wird insbesondere überprüft, ob die Nachführungsdaten mit der tatsächlich gefahrenen Trajektorie des Leitfahrzeugs 2 übereinstimmt. Ferner wird überprüft, ob die Trajektorie das Folgefahrzeugs 1 sicher ist, beispielsweise ob bestimmte Mindestabstände zu Gefahrenquellen wie weiteren Verkehrsteilnehmern eingehalten werden.

Wenn bei der Plausibilisierung der Nachführungsdaten festgestellt wird, dass eine sichere automatische Nachführung nicht gewährleistet ist, wird bei dem Ausführungsbeispiel ein sicherer Fahrmodus aktiviert, das heißt, die Führung des Folgefahrzeugs 1 wird nicht mehr automatisch durchgeführt, sondern die Kontrolle wird an den Fahrer des Folgefahrzeugs 1 übergeben. Alternativ oder zusätzlich, insbesondere während einer Übergangszeit zwischen der automatischen Nachführung und der manuellen Steuerung durch den Fahrer des Folgefahrzeugs 1, kann die Geschwindigkeit verringert und eine sichere Halteposition angesteuert werden. Ferner können Signale erzeugt und ausgegeben werden, um das Ende der automatischen Nachführung und/oder die Aktivierung des sicheren Fahrmodus zu signalisieren, beispielsweise für den Fahrer des Folgefahrzeugs 1, den Fahrer des Leitfahrzeugs 2, die Vermittlungseinrichtung 3 und/oder weitere Verkehrsteilnehmer.

Bei dem Ausführungsbeispiel ist ferner vorgesehen, dass durch das Bezahlmodul 33 der Vermittlungseinrichtung ein Betrag eines Nachführungspreis bestimmt wird und ein dem Folgefahrzeug zugeordnetes Konto in Abhängigkeit von dem bestimmten Nachführungspreis belastet wird. Auf diese Weise kann etwa ein Geschäftsmodell implementiert werden, bei dem die automatische Nachführung ein Angebot einer Dienstleistung des Leitfahrzeugs 2 an das Folgefahrzeug 1 darstellt. Der bestimmte Nachführungspreis kann dabei anhand verschiedener Einflussgrößen bestimmt werden, beispielsweise anhand der Länge der Route oder der Streckenabschnitts, entlang dem die automatische Nachführung ausgeführt wird, und verschiedene Modelle der Preisgestaltung können verwirklicht werden.

Beispielsweise kann vorgesehen sein, dass ein kostenloses spontanes Andocken an freie Leitfahrzeuge 2 durchgeführt werden kann, wobei das Folgefahrzeug 1 eine automatische Nachführung durch ein Leitfahrzeug 2 nutzen kann, wenn sich beide Fahrzeuge 1, 2 aktuell im Wesentlichen auf dem gleichen Streckenabschnitt befinden. Bei einem weiteren Beispiel kann vorgesehen sein, dass ein Leitfahrzeug 2 reserviert werden kann, wenn etwa bereits im Voraus das Befahren einer bestimmten Route durch das Leitfahrzeug 2 geplant ist. Zudem kann vorgesehen sein, dass ein Leitfahrzeug 2 für einen bestimmte Route oder einen Streckenabschnitt gebucht werden kann, wobei in diesem Fall das Leitfahrzeug 2 extra bereitgestellt wird.

Beispielsweise kann die Bezahlung des Nachführungspreis für jede einzelne Fahrt erfolgen. In einem weiteren Beispiel kann eine "Flatrate" als Zahlungsweise vorgesehen sein, wobei in diesem Fall die automatische Nachführung in beliebigem Umfang genutzt werden kann.

Bei den weiteren Ausführungsbeispiel kann vorgesehen sein, dass durch die Vermittlungseinrichtung 3 Leitfahrzeuge 2 eines Platoon-Service-Providers vermittelt werden. Dies kann zum Beispiel ein Anbieter von Dienstleistungen zum automatisierten Nachführen von Folgefahrzeugen 1 sein. Ferner können etwa Taxi-, Bus- und Speditionsunternehmen, die über eine Vielzahl potentieller Leitfahrzeuge 2 verfügen, deren geplante Routen typischerweise zentral bekannt sind, die Nachführung anbieten. Da in diesem Fall die Vermittlungseinrichtung 3 eine Position zwischen dem Folgefahrzeug 1 und dem Platoon-Service-Provider einnimmt, kann eine höhere Sicherheit erreicht werden, da lediglich lizenzierte Leitfahrzeuge vermittelt werden, und ein Bezahlmodell kann durch Vermittlung über das Bezahlmodul 33 der Vermittlungseinrichtung 3 implementiert werden.

Bei dem Ausführungsbeispiel ist ferner vorgesehen, dass das Folgefahrzeug 1 und das Leitfahrzeug 2 für die Vermittlungseinrichtung 3 registriert sind. Dies erfolgt bei dem Ausführungsbeispiel mittels eines Login, das heißt mittels eines an sich bekannten Verfahrens zur Authentifizierung von Einrichtungen, die miteinander in datentechnische Verbindung 5, 6, 7 stehen. Insbesondere wird dabei durch die Vermittlungseinrichtung 3 ein Zugang zu einem Portal bereitgestellt, durch das Fahrzeugen 1, 2 auf an sich bekannte Weise die zur automatischen Nachführung notwendigen Interaktionen über ein Netzwerk ermöglicht werden.

Die Anfragedaten des Folgefahrzeugs 1 werden bei dem Ausführungsbeispiel automatisch erzeugt und übertragen, wenn das Folgefahrzeug 1 für die Vermittlungseinrichtung 3 registriert wurde. Die Anfragedaten werden dabei von dem Folgefahrzeug 1 an die Vermittlungseinrichtung 3 übertragen und durch die Vermittlungseinrichtung 3 wird eine datentechnische Verbindung des Folgefahrzeugs 1 zu dem Leitfahrzeug 2 hergestellt.

Die Übertragung der Anfragedaten erfolgt im dargestellten Fall zudem automatisch während der Planung einer Route, das heißt, das Navigationssystem 17 des Folgefahrzeugs 1 veranlasst automatisch eine Suche nach geeigneten Leitfahrzeuge 2, die ein automatisches Nachführen des Folgefahrzeugs 1 erlauben. Insbesondere wird dabei in die Routenplanung einbezogen, auf welchen Streckenabschnitten Leitfahrzeuge 2 zur Verfügung stehen und wie diese Leitfahrzeuge 2 erreicht werden können. Auf diese Weise kann die Route so geplant werden, dass das Folgefahrzeug 1 für einen möglichst großen Teil der geplanten Route automatisch nachgeführt werden kann.

Insbesondere kann dabei auch ein Wechsel zwischen verschiedenen Leitfahrzeug 2 zumindest teilweise automatisch vorgenommen werden. Beispielsweise kann die Führung des Folgefahrzeugs 1 für einen Übergang der automatischen Nachführung von einem ersten zu einem zweiten Leitfahrzeug 2 manuell durch den Fahrer des Folgefahrzeugs 1 erfolgen, wobei beispielsweise Navigationsanweisungen ausgegeben werden können. Zudem kann die Führung des Folgefahrzeugs 1 auch in dieser Situation automatisch erfolgen oder Fahrerassistenzsysteme 15a, 15b, 15c können die Führung des Folgefahrzeugs 1 unterstützen. Ein Wechsel zwischen zwei Leitfahrzeugen 2 umfasst insbesondere eine manuelle oder zumindest teilweise automatische Führung des Folgefahrzeugs 1 zu einer bestimmten Zielposition relativ zu dem neuen Leitfahrzeug 2.

In weiteren Ausführungsbeispielen werden verschiedene Schritte des Verfahrens nicht automatisch ausgeführt, sondern folgen auf Eingaben eines Nutzers, insbesondere des Fahrers des Folgefahrzeugs 1 oder des Leitfahrzeugs 2.

Nachfolgend werden verschiedene Ausführungsbeispiele für die Nutzung des erfindungsgemäßen Systems beschrieben:
Bei einem ersten Beispiel befährt das Folgefahrzeug 1 eine längere Route, beispielsweise bei einer Urlaubsfahrt oder einer Dienstreise. Auf einem Streckenabschnitt, etwa auf einer Autobahn, wird das Folgefahrzeug 1 an ein verfügbares Leitfahrzeug 2 angekoppelt und durch dieses automatisch nachgeführt. Für diesen Teil sind jetzt Nebentätigkeiten für den Fahrer des Folgefahrzeugs 1 möglich, da er nicht auf den laufenden Verkehr achten muss. Um eine höhere Planungssicherheit zu erreichen, kann vorgesehen sein, dass mittels eines Portals über die Vermittlungseinrichtung 3 Leitfahrzeuge 1 für bestimmte Streckenabschnitte vorab kostenpflichtig für die automatische Nachführung des Folgefahrzeugs 1 reserviert werden können, beispielsweise Fernbusse, Lieferwagen oder ähnliche Fahrzeuge.
Bei einem zweiten Beispiel holt ein Nutzer einen Geschäftspartner vom Flughafen ab. Das Folgefahrzeug 1 wird manuell von dem Nutzer selbst zum Flughafen geführt, für den Weg vom Flughafen zur Zielposition wird es durch ein Leitfahrzeug 2 geführt, welches am Flughafen bereitgestellt wurde. Dies kann beispielsweise durch ein Taxiunternehmen erfolgen, welches über geeignete Leitfahrzeuge 2 verfügt. Während der Fahrt kann das Folgefahrzeug bereits als "rollendes Arbeitszimmer" genutzt werden, wobei die vertrauliche Atmosphäre nicht durch einen Chauffeur gestört wird.
Bei dem dritten Beispiel sind Kooperationen mit Unternehmen zur Bereitstellung von Leitfahrzeug 2 vorgesehen, wobei mittels eines Portals über die Vermittlungseinrichtung 3 die Leitfahrzeuge 2 vermittelt werden. Hierfür kann der Betreiber des Portals zum Beispiel eine Provision erheben. Neben buchbaren Einzelfahrten können auch Flatrates vorgesehen sein, die über eine bestimmte Laufzeit zu einer stärkeren Bindung des Fahrers an die durch das Portal bereitgestellte Infrastruktur führen können. Für besonders nachgefragte Streckenabschnitte kann auch der Betreiber des Portals eigene Leitfahrzeuge 2 bereitstellen.

## Patentansprüche

1. Verfahren zum Bereitstellen einer zumindest teilweise automatischen Führung eines Folgefahrzeugs (1), bei dem
Verfügbarkeitsdaten zumindest eines Leitfahrzeugs (2) erfasst werden; Anfragedaten des Folgefahrzeugs (1) erfasst werden;
anhand der Verfügbarkeitsdaten und der Anfragedaten Angebotsdaten über das Leitfahrzeug (2) erzeugt und an das Folgefahrzeug (1) übertragen werden;
anhand der Angebotsdaten eine Angebotsausgabe erzeugt und ausgegeben wird; eine Nutzereingabe erfasst wird und anhand der Nutzereingabe Annahmedaten erzeugt werden;
Nachführungsdaten erzeugt und an das Folgefahrzeug (1) übertragen werden; und das Folgefahrzeug (1) anhand der Nachführungsdaten zumindest teilweise automatisch hinter dem Leitfahrzeug (2) geführt wird
**dadurch gekennzeichnet, dass**
die Verfügbarkeitsdaten des zumindest einen Leitfahrzeugs (2) eine aktuelle Position, eine geplante Route und/oder eine maximale Anzahl zugelassener Folgefahrzeuge (1) umfassen,
die Anfragedaten des Folgefahrzeugs (1) eine aktuelle Position und/oder eine geplante Route umfassen, und
die Angebotsdaten Informationen über Leitfahrzeuge (2) umfassen, die anhand der Verfügbarkeitsdaten und der Anfragedaten als relevant für das Folgefahrzeug (1) ermittelt werden.

2. Verfahren gemäß einem der vorhergehenden Ansprüche,
**dadurch gekennzeichnet, dass**
die Anfragedaten automatisch während einer Routenplanung eines Navigationssystems (17) erzeugt werden.

3. Verfahren gemäß einem der vorhergehenden Ansprüche,
**dadurch gekennzeichnet, dass**
die Anfragedaten anhand einer weiteren Nutzereingabe erzeugt werden.

4. Verfahren gemäß einem der vorhergehenden Ansprüche,
**dadurch gekennzeichnet, dass**
beim Ausgeben der Angebotsausgabe eine grafische Darstellung einer Route mit Informationen über das zumindest eine Leitfahrzeug (2) angezeigt wird.

5. Verfahren gemäß einem der vorhergehenden Ansprüche,
**dadurch gekennzeichnet, dass**
ferner eine Nachführungsbestätigung des Leitfahrzeugs (2) erfasst und an das Folgefahrzeug (1) übertragen wird.

6. Verfahren gemäß einem der vorhergehenden Ansprüche,
**dadurch gekennzeichnet, dass**
die Nachführungsdaten Informationen für ein Führen des Folgefahrzeugs (1) zu einer Zielposition relativ zu dem Leitfahrzeug (1) umfassen.

7. Verfahren gemäß einem der vorhergehenden Ansprüche,
**dadurch gekennzeichnet, dass**
während des automatischen Führens des Folgefahrzeugs (1) durch Folgefahrzeugsensoren (16a; 16b) Umgebungsdaten erfasst werden und anhand der erfassten Umgebungsdaten die Nachführungsdaten plausibilisiert werden.

8. Verfahren gemäß einem der vorhergehenden Ansprüche,
**dadurch gekennzeichnet, dass**
ferner durch ein Bezahlmodul (33) ein Nachführungspreis bestimmt wird und ein dem Folgefahrzeug (1) zugeordnetes Konto in Abhängigkeit von dem bestimmten Nachführungspreis belastet wird.

9. Verfahren gemäß einem der vorhergehenden Ansprüche,
**dadurch gekennzeichnet, dass**
die Verfügbarkeitsdaten durch eine Vermittlungseinrichtung (3) erfasst und gespeichert werden und die Angebotsdaten durch die Vermittlungseinrichtung (3) erzeugt werden.

10. Verfahren gemäß Anspruch 9, **dadurch gekennzeichnet, dass**
die Anfragedaten automatisch erzeugt und übertragen werden, wenn eine Registrierung des Folgefahrzeugs (1) für die Vermittlungseinrichtung (3) registriert wurde.

11. Verfahren gemäß Anspruch 9 oder 10, **dadurch gekennzeichnet, dass**
die Annahmedaten von dem Folgefahrzeug (1) an die Vermittlungseinrichtung (3) übertragen werden und durch die Vermittlungseinrichtung (3) eine datentechnische Verbindung des Folgefahrzeugs (1) zu dem Leitfahrzeug (2) hergestellt wird.

12. System zum Bereitstellen einer zumindest teilweise automatischen Führung eines Folgefahrzeugs (1), wobei das System zur Durchführung des Verfahrens nach einem der vorangegangenen Ansprüche eingerichtet und ausgelegt ist, mit einer Erfassungseinheit (31), durch die Verfügbarkeitsdaten zumindest eines Leitfahrzeugs (2) und Anfragedaten des Folgefahrzeugs (1) erfassbar sind;
einer Angebotseinheit (32), durch die anhand der Verfügbarkeitsdaten und der Anfragedaten Angebotsdaten über das Leitfahrzeug (2) erzeugbar und an das Folgefahrzeug (1) übertragbar sind;
einer Recheneinheit (11), durch die anhand der Angebotsdaten eine Angebotsausgabe erzeugbar ist;
einer Ausgabeeinheit (13), durch die die Angebotsausgabe ausgebbar ist;
einer Eingabeeinheit (14), durch die eine Nutzereingabe erfassbar ist, wobei anhand der Nutzereingabe Annahmedaten erzeugbar sind;
einer Nachführungseinheit (21), durch die Nachführungsdaten erzeugbar und an das Folgefahrzeug (1) übertragbar sind; und
einer Steuerungseinheit (10), durch die das Folgefahrzeugs (1) anhand der Nachführungsdaten zumindest teilweise automatisch hinter dem Leitfahrzeug (2) führbar ist.

13. System gemäß Anspruch 12, **dadurch gekennzeichnet, dass**
ferner durch ein Navigationssystem (17) eine geplante Route des Folgefahrzeugs (1) erzeugbar ist und die Anfragedaten automatisch anhand der geplanten Route erzeugbar sind.

## Claims

1. Method for providing an at least partially automatic guidance of a following vehicle (1), with which
availability data of at least one leader vehicle (2) are acquired;
query data of the following vehicle (1) are acquired;
by means of the availability data and the query data, offer data can be generated via the leader vehicle (2) and transmitted to the following vehicle (1);
an offer output based on the offer data is generated and output; and
a user input is acquired, and acquisition data based on the user input are generated; and
tracking data are generated and transmitted to the following vehicle (1); and the following vehicle (1) is at least partially automatically guided behind the leader vehicle (2) on the basis of the tracking data,
**characterized in that**
the availability data of the at least one leader vehicle (2) comprise a current position, a planned route, and/or a maximum number of authorized following vehicles (1),
the query data of the following vehicle (1) comprise a current position and/or a planned route, and
the offer data comprise information about leader vehicles (2) which is determined as relevant for the following vehicle (1) on the basis of the availability data and the query data.

2. Method according to one of the preceding claims,
**characterized in that**
the query data are generated automatically during route planning of a navigation system (17).

3. Method according to one of the preceding claims,
**characterized in that**
the query data are generated based on a further user input.

4. Method according to one of the preceding claims,
**characterized in that**
a graphical representation of a route with information about the at least one leader vehicle (2) is displayed when the offer output is output.

5. Method according to one of the preceding claims,
**characterized in that**
a tracking confirmation of the leader vehicle (2) is also acquired and transmitted to the following vehicle (1).

6. Method according to one of the preceding claims,
**characterized in that**
the tracking data comprise information for guiding the following vehicle (1) to a target position relative to the leader vehicle (1).

7. Method according to one of the preceding claims,
**characterized in that**
environmental data are acquired during the automatic guidance of the following vehicle (1) by following vehicle sensors (16a; 16b), and the tracking data are checked for plausibility on the basis of the acquired environmental data.

8. Method according to one of the preceding claims,
**characterized in that**
a tracking price is also determined by a payment module (33), and an account associated with the following vehicle (1) is charged depending on the determined tracking price.

9. Method according to one of the preceding claims,
**characterized in that**
the availability data are acquired and stored by a switching device (3), and the offer data are generated by the switching device (3).

10. Method according to claim 9,
**characterized in that**
the query data are automatically generated and transmitted when a registration of the following vehicle (1) has been registered for the switching device (3).

11. Method according to claim 9 or 10,
**characterized in that**
the acceptance data are transmitted from the following vehicle (1) to the switching device (3), and a data connection of the following vehicle (1) to the leader vehicle (2) is established by the switching device (3).

12. System for providing an at least partially automatic guidance of a following vehicle (1), wherein the system is configured and designed to carry out the method according to one of the preceding claims, comprising a detection unit (31) by means of which availability data of at least one leader vehicle (2) and query data of the following vehicle (1) can be acquired;
an offer unit (32) by means of which, on the basis of the availability data and the query data, offer data can be generated via the leader vehicle (2) and transmitted to the following vehicle (1);
a computing unit (11) by means of which an offer output can be generated on the basis of the offer data;
an output unit (13) by means of which the offer output can be output;
an input unit (14) by means of which a user input can be acquired, wherein acquisition data can be generated on the basis of the user input;
a tracking unit (21) by means of which tracking data can be generated and transmitted to the following vehicle (1); and
a control unit (10) by means of which the following vehicle (1) can be guided at least partially automatically behind the leader vehicle (2) on the basis of the tracking data.

13. System according to claim 12,
**characterized in that**
a planned route of the following vehicle (1) can also be generated by a navigation system (17), and the query data can be automatically generated on the basis of the planned route.

## Revendications

1. Procédé pour préparer une conduite au moins partiellement automatique d'un véhicule suiveur (1), dans lequel
des données de disponibilité d'au moins un véhicule pilote (2) sont détectées ;
des données de demande du véhicule suiveur (1) sont détectées ;
des données d'offre concernant le véhicule pilote (2) sont générées à l'aide des données de disponibilité et des données de demande et transmises au véhicule suiveur (1) ;
une émission d'offre est générée à l'aide des données d'offre et émise ; une entrée utilisateur est détectée et des données d'acceptation sont générées à l'aide de l'entrée utilisateur ;
des données de poursuite sont générées et transmises au véhicule suiveur (1) ; et
le véhicule suiveur (1) est conduit à l'aide des données de poursuite de manière au moins partiellement automatique derrière le véhicule pilote (2)
**caractérisé en ce que**
les données de disponibilité dudit au moins un véhicule pilote (2) comprennent une position réelle, un trajet planifié et/ou un nombre maximum de véhicules suiveurs (1) autorisés,
les données de demande du véhicule suiveur (1) comprennent une position réelle et/ou un trajet planifié et
les données d'offre comprennent des informations sur le véhicule pilote (2) qui sont déterminées comme pertinentes pour le véhicule suiveur (1) à l'aide des données de disponibilité et des données de demande.

2. Procédé selon l'une quelconque des revendications précédentes,
**caractérisé en ce que**
les données de demande sont générées automatiquement pendant une planification de trajet d'un système de navigation (17).

3. Procédé selon l'une quelconque des revendications précédentes,
**caractérisé en ce que**
les données de demande sont générées à l'aide d'une autre entrée utilisateur.

4. Procédé selon l'une quelconque des revendications précédentes,
**caractérisé en ce que**
lors de l'émission de l'émission d'offre, une représentation graphique d'un trajet présentant des informations sur ledit au moins un véhicule pilote (2) est affichée.

5. Procédé selon l'une quelconque des revendications précédentes,
**caractérisé en ce que**
une confirmation de poursuite du véhicule pilote (2) est en outre détectée et transférée au véhicule suiveur (1).

6. Procédé selon l'une quelconque des revendications précédentes,
**caractérisé en ce que**
les données de poursuite comprennent des informations pour une conduite du véhicule suiveur (1) vers une position cible par rapport au véhicule pilote (1).

7. Procédé selon l'une quelconque des revendications précédentes,
**caractérisé en ce que**
pendant la conduite automatique du véhicule suiveur (1), par des capteurs (16a, 16b) du véhicule suiveur, des données environnementales sont détectées et la plausibilité des données de poursuite est contrôlée à l'aide des données environnementales détectées.

8. Procédé selon l'une quelconque des revendications précédentes,
**caractérisé en ce que**
un prix de poursuite est en outre déterminé à l'aide d'un module de paiement (33) et un compte associé au véhicule suiveur (1) est débité en fonction du prix de poursuite déterminé.

9. Procédé selon l'une quelconque des revendications précédentes,
**caractérisé en ce que**
les données de disponibilité sont détectées et enregistrées par un dispositif de commutation (3) et les données d'offre sont générées par le dispositif de commutation (3).

10. Procédé selon la revendication 9,
**caractérisé en ce que**
les données de demande sont générées et transmises automatiquement lorsqu'un enregistrement du véhicule suiveur (1) pour le dispositif de commutation (3) a été enregistré.

11. Procédé selon la revendication 9 ou 10,
**caractérisé en ce que**
les données d'acceptation sont transmises par le véhicule suiveur (1) au dispositif de commutation (3) et une liaison informatique entre le véhicule suiveur (1) et le véhicule pilote (2) est établie par le dispositif de commutation (3).

12. Système pour préparer une conduite au moins partiellement automatique d'un véhicule suiveur (1), le système étant conçu et réalisé pour réaliser le procédé selon l'une quelconque des revendications précédentes et présentant une unité de détection (31) permettant de détecter les données de disponibilité d'au moins un véhicule pilote (2) et les données de demande du véhicule suiveur (1) ;
une unité d'offre (32) permettant de générer des données d'offre concernant le véhicule pilote (2) à l'aide des données de disponibilité et des données de demande et de les transmettre au véhicule suiveur (1) ;
une unité de calcul (11), permettant de générer une émission d'offre à l'aide des données d'offre ;
une unité d'émission (13) permettant d'émettre l'émission d'offre ;
une unité d'entrée (14), permettant de détecter une entrée utilisateur, des données d'acceptation pouvant être générées à l'aide de l'entrée utilisateur ;
une unité de poursuite (21) permettant de générer les données de poursuite et de les transmettre au véhicule suiveur (1) ; et
une unité de commande (10) permettant de conduire le véhicule suiveur (1) de manière au moins partiellement automatique derrière le véhicule pilote (2) à l'aide des données de poursuite.

13. Système selon la revendication 12,
**caractérisé en ce que**
un trajet planifié du véhicule suiveur (1) peut en outre être généré par un système de navigation (17) et les données de demande peuvent être générées automatiquement à l'aide du trajet planifié.
